# EUROPÄISCHE PATENTSCHRIFT

(11) **EP 3 737 842 B1**
(45) Veröffentlichungstag und Bekanntmachung des Hinweises auf die Patenterteilung: **09.03.2022**
(21) Anmeldenummer: 19700358.5
(22) Anmeldetag: 09.01.2019
(51) Int. Cl.: F01N 3/20, F01N 3/28, F01N 9/00, F01N 11/00

(54) **VORRICHTUNG UND VERFAHREN ZUM BEHEIZEN EINER VORRICHTUNG ZUR ABGASNACHBEHANDLUNG**
APPARATUS AND METHOD FOR HEATING AN EXHAUST GAS AFTERTREATMENT DEVICE
DISPOSITIF ET PROCÉDÉ DE CHAUFFAGE D'UN SYSTÈME DE POST-TRAITEMENT DES GAZ D'ÉCHAPPEMENT

(30) Priorität: 12.01.2018 DE 102018200464
(43) Veröffentlichungstag der Anmeldung: 18.11.2020
(73) Patentinhaber: Vitesco Technologies GmbH, 93055 Regensburg (DE)
(72) Erfinder: BRÜCK, Rolf, 65824 Schwalbach a. Ts. (DE)
(74) Vertreter: Vitesco Technologies
(86) Internationale Anmeldenummer: PCT/EP2019/050369
(87) Internationale Veröffentlichungsnummer: WO 2019/137926

(56) Entgegenhaltungen:
- EP-A2- 0 233 860
- DE-A1- 4 132 439
- DE-A1- 4 132 439
- DE-A1- 4 322 037
- DE-A1- 10 056 279
- DE-T2- 69 414 816
- DE-U1-202005 007 243
- JP-A- 2010 203 419
- JP-A- 2010 203 419

## Beschreibung

### Technisches Gebiet

Die Erfindung betrifft eine Vorrichtung zum Beheizen einer Abgasnachbehandlungseinheit in einem Fahrzeug, welches neben einem Verbrennungsmotor einen Elektromotor als Antriebsquelle aufweist, wobei zumindest ein elektrisches Heizelement (1, 7) vorgesehen ist, das zur Beheizung eines von Abgas durchströmbaren Wabenkörpers (5) in einem in dem Wabenkörper (5) ausgebildeten Hohlraum (6) angeordnet ist, wobei der Wabenkörper (5) aus einer Mehrzahl von aufeinandergestapelten Metallfolien gebildet ist, welche zwischeneinander eine Mehrzahl von Strömungskanälen ausbilden, die entlang einer axialen Richtung durchströmbar sind.

### Stand der Technik

Es ist bekannt, dass ein Großteil der Schadstoffbelastung durch Verbrennungsmotoren in der sogenannten Kaltstartphase erzeugt wird, wenn die zur Abgasnachbehandlung vorgesehenen Komponenten noch nicht ihre eigentlich vorgesehene Betriebstemperatur haben. Die geplante Behandlung und chemische Umsetzung des Abgases in unbedenklichere Endprodukte findet in diesen Phasen nur eingeschränkt statt.

Im Stand der Technik sind daher beispielweise Heizkatalysatoren bekannt, die unter Ausnutzung des ohmschen Widerstandes elektrisch aufgeheizt werden, um früher die zum Betrieb nötige Temperatur zu erreichen. Hierzu gibt es beispielsweise von Heizleitern durchzogene Heizscheiben, die von dem Abgas durchströmt werden können und somit zu einer Aufheizung des Abgasstroms führen, wodurch der eigentlich für die chemische Umwandlung vorgesehene Katalysator ebenfalls früher auf seine vorgesehen Betriebstemperatur gebracht werden kann als ohne zusätzliche Beheizung.

Die bisher im Stand der Technik bekannten Vorrichtungen zur Aufheizung von Komponenten zur Abgasnachbehandlung sind vorwiegend für den Gebrauch in rein verbrennungsmotorisch angetriebenen Fahrzeugen vorgesehen. Jedoch tritt die mit dem Kaltstart verbundene Problematik der erhöhten Abgasemissionen auch und gerade bei Hybridfahrzeugen auf, die neben dem verbrennungsmotorischen Antrieb auch einen elektrischen Antrieb aufweisen. Insbesondere bei Fahrzeugen, die rein elektrisch fahren können, kommt es vermehrt zu Stillstandzeiten des Verbrennungsmotors, weswegen der Anteil Kaltstartphase relativ zur Gesamtbetriebsdauer erhöht wird gegenüber rein verbrennungsmotorisch betriebenen Fahrzeugen. Bislang sind im Stand der Technik keine Vorrichtungen und Verfahren bekannt, die eine gezielte Verbesserung dieser Problematik bewirken. Die DE 41 32 439 A1 und EP 0 233 860 B1 zeigen jeweils eine Vorrichtung zum Beheizen einer Abgasnachbehandlungseinheit. Die JP 2010 203419 A zeigt ein Verfahren zum Beheizen einer Abgasnachbehandlungseinheit für ein Hybridfahrzeug.

Darstellung der Erfindung, Aufgabe, Lösung, Vorteile
Daher ist es die Aufgabe der vorliegenden Erfindung eine Vorrichtung und ein Verfahren zum Beheizen einer Vorrichtung zur Abgasnachbehandlung zu schaffen, welche insbesondere bei Hybridfahrzeugen eine zuverlässige Reduzierung der bei Kaltstartphasen erhöhten Emissionswerte erreicht.

Die Aufgabe hinsichtlich der Vorrichtung zur Beheizung wird durch eine Vorrichtung mit den Merkmalen von Anspruch 1 gelöst.

Ein Ausführungsbeispiel der Erfindung betrifft eine Vorrichtung zum Beheizen einer Abgasnachbehandlungseinheit in einem Fahrzeug, welches neben einem Verbrennungsmotor einen Elektromotor als Antriebsquelle aufweist, wobei zumindest ein elektrisches Heizelement vorgesehen ist, das zur Beheizung eines von Abgas durchströmbaren Wabenkörpers in einem in dem Wabenkörper ausgebildeten Hohlraum angeordnet ist, wobei der Wabenkörper aus einer Mehrzahl von aufeinandergestapelten Metallfolien gebildet ist, welche zwischeneinander eine Mehrzahl von Strömungskanälen ausbilden, die entlang einer axialen Richtung durchströmbar sind, wobei der Wabenkörper eine in radialer Richtung verlaufende Kaverne aufweist, in welcher ein Heizelement aufgenommen ist.

Der Wabenkörper ist bevorzugt aus metallischen Folien gebildet, die zu einem Lagenstapel aufeinandergestapelt wurden und in einen Mantel, welcher das Gehäuse des Wabenkörpers bildet, eingesetzt wurden. Der Lagenstapel kann vorteilhafterweise auch aufgewickelt oder aufgerollt werden, um einen dem Einsatzzweck angepassten Wabenkörper zu erzeugen.

Die Kaverne zur Aufnahme des Heizelementes ist erfindungsgemäß in radialer Richtung des Wabenkörpers ausgebildet und verläuft von seinem äußeren Umfang, welcher durch den Mantel bestimmt ist, hin zum durch die Mittelachse des Wabenkörpers gebildeten Zentrum oder sogar in radialer Richtung darüber hinaus. Die Kaverne ist erfindungsgemäß durch eine vorherige Lochung der einzelnen zur Erzeugung des Wabenkörpers verwendeten Metallfolien erzeugt. Erfindungsgemäß weisen die Metallfolien langlochartige in Umfangsrichtung des Wabenkörpers verlaufende Lochungen auf, die derart angeordnet sind, dass sich die Lochungen der einzelnen Lagen überlagern, wenn der Lagenstapel zum Wabenkörper aufgerollt oder aufgewickelt wurde.

Das erfindungsgemäß vorherige Einbringen der Lochungen in die Metallfolien ist vorteilhaft, da somit eine geradlinige Kaverne erzeugt werden kann, die in radialer Richtung von außen nach innen verläuft, ohne dass dabei ein spanendes Verfahren am bereits aufgewickelten Wabenkörper angewendet werden muss. Hierbei entstehende Späne könnten den Wabenkörper, respektive die von ihm ausgebildeten Strömungskanäle verstopfen.

Ein Heizelement in der Kaverne des Wabenkörpers kann direkt zur Aufheizung der metallischen Struktur des Wabenkörpers genutzt werden, ohne zwingend einen Abgasstrom zur Übertragung der Wärme zu benötigen. Das Heizelement kann bevorzugt von außen in die Kaverne eingeführt werden und an dem den Wabenkörper umgebenden Mantel befestigt werden. Das Heizelement kann seine Wärme bevorzugt in axialer Richtung des Wabenkörpers abgeben.

Besonders vorteilhaft ist es, wenn das Heizelement mit einer Netzspannung betreibbar ist, die deutlich oberhalb der in einem verbrennungsmotorisch betriebenen Fahrzeug zur Verfügung stehenden Bordspannung liegt, wobei insbesondere eine Netzspannung von 230 Volt vorteilhaft ist.

Gewöhnlich werden Heizelemente im Abgasstrang, wie beispielweise die Heizscheibe eines Heizkatalysators, mit der Bordspannung des Fahrzeugs betrieben. Diese liegt üblicherweise bei 12 Volt in verbrennungsmotorisch betriebenen Fahrzeugen. Einige Hybridfahrzeuge weisen Bordnetze auf, die bereits mit 48 Volt betrieben werden. In Hybridfahrzeugen wird zum Betrieb des Elektromotors als Antriebsquelle eine deutlich höhere Bordspannung von teilweise über 300 Volt benötigt, weshalb auch das Heizelement mit einer höheren Spannung betrieben werden kann. Vorteilhaft ist hierbei, dass bei einer höheren Spannung eine gewünscht Leistungsabgabe bereits bei geringeren Stromstärken erzeugt werden kann.

Auch ist es vorteilhaft, wenn das Heizelement in radialer Richtung von außen nach innen betrachtet einen mit einem den Wabenkörper umgebenden Mantel in Kontakt stehenden Bereich aufweist, einen thermischen Isolationsbereich und eine Heizzone.

Insbesondere der thermische Isolationsbereich zwischen der eigentlichen Heizzone und dem Montagebereich, mit welchem das Heizelement am Mantel befestigt ist, ist notwendig, da gezielt eine Wärmeübertragung hin zum Mantel und zur Außenseite des Wabenkörpers verhindert beziehungsweise reduziert werden kann.

Dadurch wird ein größerer Anteil der vom Heizelement erzeugten Wärme zur Aufheizung der eigentlichen Wabenstruktur verwendet, an welcher die chemische Umwandlung des Abgases im Betrieb stattfindet.

Der Isolationsbereich kann als zusätzliches Element aus einem isolierenden Material ausgebildet sein oder auch als Teil des Montagebereichs selbst ausgebildet sein, indem dieser aus einem thermisch isolierenden Material gefertigt ist.

Durch das Vorsehen eines Heizelementes im Wabenkörper kann eine fortwährende Temperierung des Wabenkörpers erreicht werden, insbesondere dann, wenn der Verbrennungsmotor nicht betrieben wird. Der Wabenkörper kann somit während des rein elektrischen Fahrbetriebs temperiert werden, so dass die zur wirksamen Umsetzung des Abgases notwendige Temperatur schneller erreicht wird und somit die von dem Kaltstart resultierenden erhöhten Abgasemissionen stark reduziert werden.

Auch ist es zu bevorzugen, wenn dem Wabenkörper in Strömungsrichtung des Abgases eine Heizscheibe vorgelagert ist, welche elektrisch beheizbar ist. Eine zusätzliche Heizscheibe in Strömungsrichtung vor dem Wabenkörper ist vorteilhaft, um auch im verbrennungsmotorischen Betrieb eine schnellere Aufheizung zu erreichen, indem das Abgas vor dem Einströmen in den Wabenkörper bereits erwärmt wurde. Durch einen solchen dualen Aufbau kann sowohl im verbrennungsmotorischen Betrieb als auch im elektromotorischen Betrieb eine schneller Aufheizung des Wabenkörpers und somit eine schnellere wirkungsvolle Abgasumsetzung erreicht werden.

Darüber hinaus ist es vorteilhaft, wenn das Heizelement im Wabenkörper und die dem Wabenkörper vorgelagerte Heizscheibe unabhängig voneinander beheizbar sind. Dies ist vorteilhaft, um abhängig von der jeweils gewählten Betriebsart die richtige Beheizung zu realisieren. Auch ein Mischbetrieb der Heizscheibe und des Heizelements können vorgesehen werden, um die Aufheizung im verbrennungsmotorischen Betrieb weiter zu verbessern.

Die Aufgabe hinsichtlich des Verfahrens zur Beheizung wird durch ein Verfahren mit den Merkmalen von Anspruch 7 gelöst.

Ein Ausführungsbeispiel der Erfindung betrifft ein Verfahren zur Beheizung eine Abgasnachbehandlungseinheit in einem Fahrzeug mit zumindest einem Verbrennungsmotor und zumindest einem Elektromotor als Antriebsquellen, wobei zumindest zwei unterschiedliche Heizmethoden verwendet werden, wobei die jeweilige Heizmethode abhängig von der jeweils zur Erzeugung des Vortriebs verwendeten Antriebsquelle ausgewählt wird.

Im rein elektromotorischen Betrieb werden vom Verbrennungsmotor keine Abgase erzeugt, die die Wärme von der Heizscheibe hin zum Wabenkörper übertragen könnte. Eine Aufheizung des Wabenkörpers über die Heizscheibe wäre daher wenig effektiv. Es ist daher vorteilhaft, wenn der Wabenkörper direkt durch das in ihm angeordnete Heizelement erwärmt wird. Im verbrennungsmotorischen Betrieb kann eine Erwärmung des Wabenkörpers auf herkömmlichen Wege durch die Aufheizung des strömenden Abgases durch die Heizscheibe erfolgen.

Weiterhin ist es vorteilhaft, wenn bei Nutzung des Verbrennungsmotors als Antriebsquelle eine Beheizung der Abgasnachbehandlungseinheit über die dem Wabenkörper vorgelagerte Heizscheibe erfolgt, wobei der durch die Heizscheibe strömende Abgasstrom durch die Heizscheibe erhitzt wird und der erhitzte Abgasstrom im Folgenden den Wabenkörper erhitzt. Das Abgas wird somit auf ein höheres Temperaturniveau gebracht, weswegen auch der Wabenkörper schneller erhitzt wird und die chemische Umwandlung schneller erfolgen kann.

Auch ist es zweckmäßig, wenn bei Nutzung des Elektromotors als Antriebsquelle eine Beheizung der Abgasnachbehandlungseinheit über das in der Kaverne des Wabenkörpers angeordnete Heizelement erfolgt. Dies ist vorteilhaft, da der Abgasstrom als Transportmedium für die von der Heizscheibe erzeugte Wärme fehlt. Das Heizmittel im Wabenkörper kann eine fortwährende Erwärmung des Wabenkörpers sicherstellen.

Darüber hinaus ist es vorteilhaft, wenn das Heizelement mit einer Spannung von ungefähr 230 Volt oder mehr beheizt wird, wodurch bereits bei geringen Stromstärken von 1 bis 1,5 Ampere eine Leistungsabgabe von bis zu 300 Watt, vorzugsweise 100 Watt bis 200 Watt, erreicht wird. Geringe Stromstärken sind vorteilhaft, da die Gefahr für den Menschen bei Fehlern, wie beispielsweise Kurzschlüssen sinkt. Des Weiteren werden durch die im Vergleich zu dem bisher gebräuchlichen Spannungsniveau die entstehenden Leitungsverluste deutlich reduziert.

Weiterhin ist es zweckmäßig, wenn die Erwärmung des Wabenkörpers durch das Heizelement kontinuierlich solange erfolgt, solange der Verbrennungsmotor nicht betrieben wird. Dies ist vorteilhaft, um den Wabenkörper jederzeit auf einem Temperaturniveau zu halten, welches eine schnelle Umwandlung der Abgase ermöglicht, sollte der Verbrennungsmotor wieder aktiviert werden. Abhängig von der Applikation des Hybridfahrzeugs und der Auslegung der Stromspeicher sowie der jeweiligen Fahrsituation kann es zu einer plötzlichen Aktivierung des Verbrennungsmotors kommen. Ein bereits ausreichend vorgewärmter Wabenkörper ist daher vorteilhaft.

Vorzugsweise kann auch eine aktive Regelung zur Ansteuerung des Heizelementes vorgesehen sein. Die aktive Regelung kann beispielsweise unter Berücksichtigung von zusätzlichen Eingangsgrößen, wie beispielsweise der Außentemperatur, dem Betriebszustand des Verbrennungsmotors oder der Temperatur des Wabenkörpers erfolgen. Zur Regulierung der Beheizung durch das Heizelement kann alternativ oder zusätzlich auch ein PTC-Heizelement vorgesehen sein oder das Heizelement selbst kann als PTC-Heizelement ausgebildet sein.

Auch ist es zu bevorzugen, wenn eine Steuerungseinheit zur Überwachung des Fahrzeugs vorgesehen ist, die abhängig von der jeweils aktiven Antriebsquelle und der momentanen Fahrsituation eine Prognose über die zukünftig gewählte Antriebsart erzeugt, wobei bei einem zu erwartenden Einsatz des Verbrennungsmotors als Antriebsquelle die Aufheizung des Wabenkörpers über das Heizelement gestartet wird.

Die Steuerungseinheit kann ein eigenständiges Steuergerät sein oder in ein bereits für einen anderen Zweck vorhandenes Steuergerät implementiert werden. Im Wesentlichen überwacht die Steuerungseinheit welche Antriebsquelle aktuell zum Vortrieb verwendet wird und in welcher Fahrsituation sich das Fahrzeug gerade befindet. Gegebenenfalls bezieht die Steuerungseinheit darüber hinaus Daten von anderen im Fahrzeug befindlichen Systemen, beispielsweise dem Navigationssystem. Daraus ermittelt die Steuerungseinheit eine Prognose für die Zukunft, welche Antriebsquelle genutzt werden wird. Sofern der Einsatz des Verbrennungsmotors als Wahrscheinlich gilt, kann das Heizelement im Wabenkörper aktiviert werden, um eine ausreichende Aufheizung des Wabenkörpers sicherzustellen.

Abhängig von der Größe des zu beheizenden Wabenkörpers und der möglichen Leistungsabgabe des Heizelementes, kann die Vorheizzeit angepasst werden. Weiterhin können spezielle Betriebsmodi vorgesehen werden, die beispielsweise eine dauerhafte Beheizung des Wabenkörpers im elektromotorischen Betrieb sicherstellen, um so jederzeit eine ausreichend hohe Betriebstemperatur am Wabenkörper zu erzeugen.

Auch ist es zweckmäßig, wenn eine Vorheizfunktion für das Heizelement vorgesehen ist, wobei die Vorheizfunktion basierend auf von einer Überwachungseinheit erfassten Werten, über einen Timer oder über ein externes Steuerungselement gestartet werden kann. Besonders vorteilhaft ist es, wenn die Vorheizfunktion über eine auf einem Mobilfunkgerät installierte App gestartet werden kann. Hierzu können von einer App beispielsweise Daten wie das Bewegungsprofil eines Nutzers, seine regelmäßigen Gewohnheiten, wie beispielsweise Abfahrtszeit am Morgen oder Ähnliches, berücksichtigt werden, um eine automatische Beheizung zu starten, so dass der Wabenkörper zum Start des Verbrennungsmotors bereits eine zur Abgasnachbehandlung ausreichende Temperatur aufweist.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine schematische Schnittdarstellung durch ein Heizelement, und
- Fig. 2: eine schematische Schnittdarstellung durch eine Wabenkörper mit einem Heizelement.

### Bevorzugte Ausführung der Erfindung

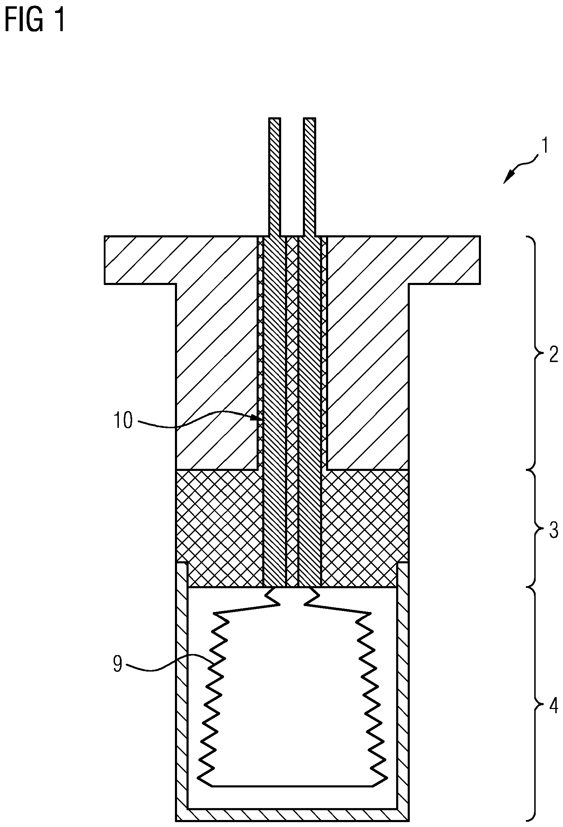

Die Figur 1 zeigt eine schematische Schnittdarstellung durch ein Heizelement 1. Das Heizelement 1 ist in drei Bereiche unterteilt. Das sogenannte kalte Ende 2, welches den Montagebereich des Heizelementes 1 darstellt. Mit diesem Bereich 2 kann das Heizelement 1 an dem Mantel eines Wabenkörpers befestigt werden und so in einer Kaverne des Wabenkörpers positioniert werden.

Darunter ist mit dem Bereich 3 ein thermischer Isolationsbereich dargestellt, der eine thermische Isolation zwischen dem darunter dargestellten Heizbereich 4 und dem Montagebereich 2 erzeugt. Der Heizbereich 4 kann auch als Heizzone bezeichnet werden.

Das gesamte Heizelement 1 ist stiftförmig ausgeführt und kann bevorzugt in radialer Richtung in einen Wabenkörper eingesteckt werden. Durch den thermischen Isolationsbereich 3 wird die Wärmeabgabe des Heizelementes 1 hin zum Montagebereich 2 reduziert, wodurch gleichzeitig auch die Wärmeverluste hin zum Montagebereich 2 und weiterhin zur Außenseite des Wabenkörpers reduziert werden. Die gesamte im Heizbereich 4 erzeugte Wärme kann daher vorteilhaft an die Wabenstruktur des Wabenkörpers abgegeben werden, wodurch insgesamt eine wirkungsvollere Aufheizung erreicht wird.

Das Heizelement 1 weist einen elektrischen Leiter 9 auf, der durch eine kanalartige Struktur 10 im Inneren des Heizelementes 1 durch den Montagebereich 2 und den thermischen Isolationsbereich 3 in den Heizbereich 4 geführt ist. Gegenüber dem Montagebereich 2 und dem thermischen Isolationsbereich 3 ist der elektrische Leiter 6 elektrisch isoliert.

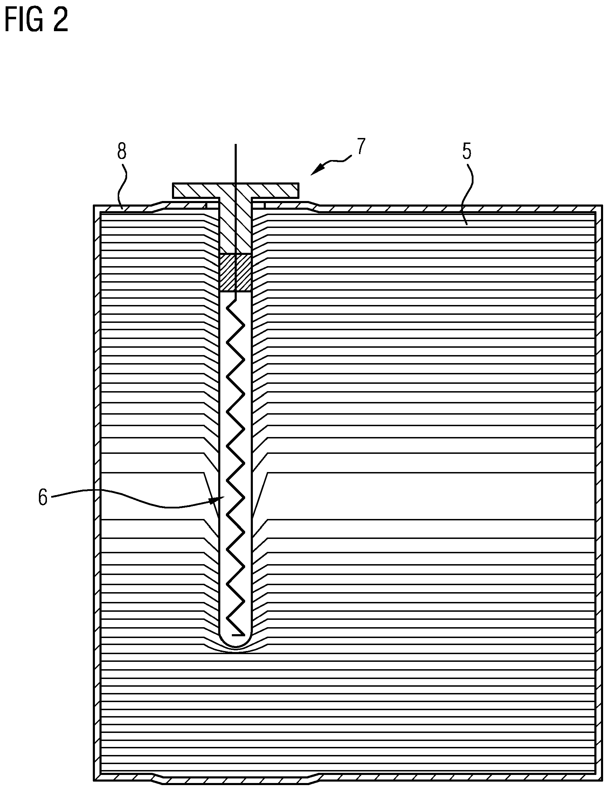

Die Figur 2 zeigt einen Schnitt durch einen aus gestapelten Metallfolien erzeugten Wabenkörper 5. Die Metallfolien weisen hierbei Lochungen auf, die im endmontierten Zustand, also wenn der Folienstapel zum Wabenkörper 5 aufgewickelt ist, in einer Flucht miteinander liegen und so die in radialer Richtung durch den Wabenkörper verlaufende Kaverne 6 ausbilden. Das Heizelement 7 ist von außen in diese Kaverne 6 eingesetzt.

Wie bereits in Figur 1 gezeigt, weist das Heizelement 7 drei Bereiche auf, wobei insbesondere der Montagebereich, mit welchem das Heizelement 7 am Mantel 8 des Wabenkörpers 5 befestigt ist durch eine thermische Isolation von dem Heizbereich getrennt ist. Dadurch wird die zielgerichtete Erwärmung des Wabenkörpers 5 mit möglichst geringen Wärmeverlusten erreicht.

Die Ausführungsbeispiele der Figuren 1 und 2 weisen insbesondere keinen beschränkenden Charakter auf und dienen der Verdeutlichung des Erfindungsgedankens.

## Patentansprüche

1. Vorrichtung zum Beheizen einer Abgasnachbehandlungseinheit in einem Fahrzeug, welches neben einem Verbrennungsmotor einen Elektromotor als Antriebsquelle aufweist, wobei zumindest ein elektrisches Heizelement (1, 7) vorgesehen ist, das zur Beheizung eines von Abgas durchströmbaren Wabenkörpers (5) in einem in dem Wabenkörper (5) ausgebildeten Hohlraum (6) angeordnet ist, wobei der Wabenkörper (5) aus einer Mehrzahl von aufeinandergestapelten Metallfolien gebildet ist, welche zwischeneinander eine Mehrzahl von Strömungskanälen ausbilden, die entlang einer axialen Richtung durchströmbar sind, wobei der Wabenkörper (5) eine in radialer Richtung verlaufende Kaverne (6) aufweist, in welcher ein Heizelement (1, 7) aufgenommen ist, **dadurch gekennzeichnet, dass** die Kaverne (6) durch eine vorherige Lochung der einzelnen zur Erzeugung des Wabenkörpers (5) verwendeten Metallfolien erzeugt ist, wobei die Metallfolien langlochartige in Umfangsrichtung des Wabenkörpers (5) verlaufende Lochungen aufweisen, die derart angeordnet sind, dass sich die Lochungen der einzelnen Lagen überlagern, wenn der Lagenstapel zum Wabenkörper (5) aufgerollt oder aufgewickelt wurde.

2. Vorrichtung nach Anspruch 1, **dadurch gekennzeichnet, dass** das Heizelement (1, 7) mit einer Netzspannung oberhalb von 12 Volt bis maximal 48 Volt betreibbar ist.

3. Vorrichtung nach einem der vorhergehenden Ansprüche, **dadurch gekennzeichnet, dass** das Heizelement (1, 7) mit einer Netzspannung betreibbar ist, die deutlich oberhalb der in einem verbrennungsmotorisch betriebenen Fahrzeug zur Verfügung stehenden Bordspannung liegt, wobei insbesondere eine Netzspannung von 230 Volt vorteilhaft ist.

4. Vorrichtung nach einem der vorhergehenden Ansprüche, **dadurch gekennzeichnet, dass** das Heizelement (1, 7) in radialer Richtung von außen nach innen betrachtet einen mit einem den Wabenkörper (5) umgebenden Mantel (8) in Kontakt stehenden Bereich (2) aufweist, einen thermischen Isolationsbereich (3) und eine Heizzone (4).

5. Vorrichtung nach einem der vorhergehenden Ansprüche, **dadurch gekennzeichnet, dass** dem Wabenkörper (5) in Strömungsrichtung des Abgases eine Heizscheibe vorgelagert ist, welche elektrisch beheizbar ist.

6. Vorrichtung nach einem der vorhergehenden Ansprüche, **dadurch gekennzeichnet, dass** das Heizelement (1, 7) im Wabenkörper (5) und die dem Wabenkörper (5) vorgelagerte Heizscheibe unabhängig voneinander beheizbar sind.

7. Verfahren zur Beheizung eine Abgasnachbehandlungseinheit in einem Fahrzeug mit zumindest einem Verbrennungsmotor und zumindest einem Elektromotor als Antriebsquellen mit zumindest einer Vorrichtung gemäß Anspruch 1, **dadurch gekennzeichnet, dass** zumindest zwei unterschiedliche Heizmethoden verwendet werden, wobei die jeweilige Heizmethode abhängig von der jeweils zur Erzeugung des Vortriebs verwendeten Antriebsquelle ausgewählt wird.

8. Verfahren nach Anspruch 7, **dadurch gekennzeichnet, dass** bei Nutzung des Verbrennungsmotors als Antriebsquelle eine Beheizung der Abgasnachbehandlungseinheit über die dem Wabenkörper (5) vorgelagerte Heizscheibe erfolgt, wobei der durch die Heizscheibe strömende Abgasstrom durch die Heizscheibe erhitzt wird und der erhitzte Abgasstrom im Folgenden den Wabenkörper (5) erhitzt.

9. Verfahren nach einem der vorhergehenden Ansprüche 7 oder 8, **dadurch gekennzeichnet, dass** bei Nutzung des Elektromotors als Antriebsquelle eine Beheizung der Abgasnachbehandlungseinheit über das in der Kaverne (6) des Wabenkörpers (5) angeordnete Heizelement (1, 7) erfolgt.

10. Verfahren nach Anspruch 9, **dadurch gekennzeichnet, dass** das Heizelement (1, 7) mit einer Spannung von ungefähr 230 Volt oder mehr beheizt wird, wodurch bereits bei geringen Stromstärken von 1 bis 1,5 Ampere eine Leistungsabgabe von bis zu 300 Watt, vorzugsweise 100 Watt bis 200 Watt, erreicht wird.

11. Verfahren nach Anspruch 9, **dadurch gekennzeichnet, dass** die Erwärmung des Wabenkörpers (5) durch das Heizelement (1, 7) kontinuierlich solange erfolgt, solange der Verbrennungsmotor nicht betrieben wird.

12. Verfahren nach einem der vorhergehenden Ansprüche 7 bis 11, **dadurch gekennzeichnet, dass** eine Steuerungseinheit zur Überwachung des Fahrzeugs vorgesehen ist, die abhängig von der jeweils aktiven Antriebsquelle und der momentanen Fahrsituation eine Prognose über die zukünftig gewählte Antriebsart erzeugt, wobei bei einem zu erwartenden Einsatz des Verbrennungsmotors als Antriebsquelle die Aufheizung des Wabenkörpers (5) über das Heizelement (1, 7) gestartet wird.

13. Verfahren nach einem der vorhergehenden Ansprüche 7 bis 11, **dadurch gekennzeichnet, dass** eine Vorheizfunktion für das Heizelement vorgesehen ist, wobei die Vorheizfunktion basierend auf von einer Überwachungseinheit erfassten Werten, über einen Timer oder über ein externes Steuerungselement gestartet werden kann.

## Claims

1. Apparatus for heating an exhaust gas aftertreatment unit in a vehicle which, besides a combustion engine, also comprises an electric motor as a drive source, wherein at least one electric heating element (1, 7) is provided, which, in order to heat a honeycomb body (5) through which exhaust gas can flow, is arranged in a cavity (6) formed in the honeycomb body (5), wherein the honeycomb body (5) is formed from a plurality of metal foils stacked one on top of the other, which metal foils form between them a plurality of flow channels, through which a flow can pass along an axial direction, wherein the honeycomb body (5) has a hollow (6) extending in the radial direction, in which a heating element (1, 7) is accommodated, **characterized in that** the hollow (6) is produced by prior piercing of the individual metal foils used to produce the honeycomb body (5), wherein the metal foils have slotted holes extending in the circumferential direction of the honeycomb body (5), which are arranged in such a way that the holes in the individual layers are superimposed when the stack of layers has been rolled up or wound up to form the honeycomb body (5).

2. Apparatus according to Claim 1, **characterized in that** the heating element (1, 7) can be operated at a system voltage above 12 volts up to a maximum of 48 volts.

3. Apparatus according to any of the preceding claims, **characterized in that** the heating element (1, 7) can be operated at a system voltage which is significantly above the onboard voltage available in a vehicle operated with a combustion engine, wherein, in particular, a system voltage of 230 volts is advantageous.

4. Apparatus according to any of the preceding claims, **characterized in that,** when viewed from the outside to the inside in the radial direction, the heating element (1, 7) has a region (2) which is in contact with a shell (8) that surrounds the honeycomb body (5), a thermal insulating region (3) and a heating zone (4).

5. Apparatus according to any of the preceding claims, **characterized in that** a heating disc that can be heated electrically is positioned ahead of the honeycomb body (5) in the flow direction of the exhaust gas.

6. Apparatus according to any of the preceding claims, **characterized in that** the heating element (1, 7) in the honeycomb body (5) and the heating disc positioned ahead of the honeycomb body (5) can be heated independently of one another.

7. Method for heating an exhaust gas aftertreatment unit in a vehicle having at least one combustion engine and at least one electric motor as drive sources by means of at least one apparatus according to Claim 1, **characterized in that** at least two different heating methods are used, wherein the respective heating method is selected according to the respective drive source being used to produce propulsion.

8. Method according to Claim 7, **characterized in that,** when the combustion engine is being used as the drive source, the exhaust gas aftertreatment unit is heated by means of the heating disc positioned ahead of the honeycomb body (5), wherein the exhaust gas stream flowing through the heating disc is heated by the heating disc, and the heated exhaust gas stream subsequently heats the honeycomb body (5).

9. Method according to either of preceding Claims 7 or 8, **characterized in that,** when the electric motor is being used as the drive source, the exhaust gas aftertreatment unit is heated by means of the heating element (1, 7) arranged in the hollow (6) of the honeycomb body (5).

10. Method according to Claim 9, **characterized in that** the heating element (1, 7) is heated with a voltage of approximately 230 volts or more, thereby achieving a power output of up to 300 watts, preferably 100 watts to 200 watts, even at low current intensities of 1 to 1.5 amps.

11. Method according to Claim 9, **characterized in that** the heating of the honeycomb body (5) by the heating element (1, 7) takes place continuously for as long as the combustion engine is not being operated.

12. Method according to any of preceding Claims 7 to 11, **characterized in that** a control unit for monitoring the vehicle is provided, which, depending on the respectively active drive source and the instantaneous driving situation, produces a prediction of the type of drive selected in future, wherein, in the event of an expected use of the combustion engine as the drive source, the heating of the honeycomb body (5) by means of the heating element (1, 7) is started.

13. Method according to any of preceding Claims 7 to 11, **characterized in that** a preheating function is provided for the heating element, wherein the preheating function can be started by means of a timer or by means of an external control element, based on values acquired by a monitoring unit.

## Revendications

1. Dispositif de chauffage d'une unité de post-traitement de gaz d'échappement dans un véhicule qui comporte, en plus d'un moteur à combustion interne, un moteur électrique comme source d'entraînement, au moins un élément chauffant électrique (1, 7) étant prévu qui est disposé dans une cavité (6), ménagée dans le corps en nid d'abeille (5), afin de chauffer un corps en nid d'abeille (5) à travers lequel les gaz d'échappement peuvent s'écouler, le corps en nid d'abeille (5) étant formé d'une pluralité de feuilles métalliques empilées qui forment une pluralité de canaux d'écoulement entre elles à travers lesquels l'écoulement peut s'effectuer dans une direction axiale, le corps en nid d'abeilles (5) comportant une caverne (6) qui s'étend dans une direction radiale et dans laquelle est reçu un élément chauffant (1, 7), **caractérisé en ce que** la caverne (6) est générée par perforation préalable des feuilles métalliques utilisées pour générer le corps en nid d'abeilles (5), les feuilles métalliques comportant des perforations qui s'étendent à la manière de trous oblongs dans la direction circonférentielle du corps en nid d'abeilles (5) et qui sont disposées de manière que les perforations des couches individuelles se chevauchent lorsque la pile de couches a été enroulée ou bobinée pour former le corps en nid d'abeilles (5).

2. Dispositif selon la revendication 1, **caractérisé en ce que** l'élément chauffant (1, 7) peut fonctionner avec une tension réseau supérieure à 12 volts jusqu'à un maximum de 48 volts.

3. Dispositif selon l'une des revendications précédentes, **caractérisé en ce que** l'élément chauffant (1, 7) peut fonctionner avec une tension réseau nettement supérieure à la tension de bord disponible dans un véhicule fonctionnant avec un moteur à combustion interne, une tension réseau de 230 volts étant particulièrement avantageuse.

4. Dispositif selon l'une des revendications précédentes, **caractérisé en ce que** l'élément chauffant (1, 7) comporte, par référence à une direction radiale de l'extérieur vers l'intérieur, une zone (2) en contact avec une chemise (8) entourant le corps en nid d'abeilles (5), une zone d'isolation thermique (3) et une zone de chauffage (4).

5. Dispositif selon l'une des revendications précédentes, **caractérisé en ce que**, par référence au sens d'écoulement des gaz d'échappement, un disque chauffant qui peut être chauffé électriquement est monté en amont du corps en nid d'abeille (5).

6. Dispositif selon l'une des revendications précédentes, **caractérisé en ce que** l'élément chauffant (1, 7) dans le corps en nid d'abeille (5) et le disque chauffant monté en amont du corps en nid d'abeille (5) peuvent être chauffés indépendamment l'un de l'autre.

7. Procédé de chauffage d'une unité de post-traitement de gaz d'échappement dans un véhicule comprenant au moins un moteur à combustion interne et au moins un moteur électrique comme sources d'entraînement à l'aide d'au moins un dispositif selon la revendication 1, **caractérisé en ce qu'**au moins deux méthodes de chauffage différentes sont utilisées, la méthode de chauffage respective étant sélectionnée en fonction de la source d'entraînement utilisée pour générer la propulsion.

8. Procédé selon la revendication 7, **caractérisé en ce que**, lorsque le moteur à combustion interne est utilisé comme source d'entraînement, l'unité de post-traitement de gaz d'échappement est chauffée par le biais du disque chauffant monté en amont du corps en nid d'abeille (5), le flux de gaz d'échappement qui s'écoule à travers le disque chauffant étant chauffé par le disque chauffant et le flux de gaz d'échappement chauffé chauffant ensuite le corps en nid d'abeille (5) .

9. Procédé selon l'une des revendications précédentes 7 ou 8, **caractérisé en ce que**, lorsque le moteur électrique est utilisé comme source d'entraînement, l'unité de post-traitement de gaz d'échappement est chauffée par le biais de l'élément chauffant (1, 7) disposé dans la caverne (6) du corps en nid d'abeille (5) .

10. Procédé selon la revendication 9, **caractérisé en ce que** l'élément chauffant (1, 7) est chauffé avec une tension d'environ 230 volts ou plus, de façon à atteindre une puissance de sortie de 300 watts, de préférence de 100 watts à 200 watts, même avec de faibles courants de 1 à 1,5 ampères.

11. Procédé selon la revendication 9, **caractérisé en ce que** le chauffage du corps en nid d'abeille (5) par l'élément chauffant (1, 7) est effectué en continu tant que le moteur à combustion interne n'est pas en fonctionnement.

12. Procédé selon l'une des revendications précédentes 7 à 11, **caractérisé en ce qu'**une unité de commande est prévue pour surveiller le véhicule, laquelle unité génère un pronostic sur le type d'entraînement sélectionné dans le futur en fonction de la source d'entraînement respectivement active et de la situation de roulement actuelle, le chauffage du corps en nid d'abeille (5) par l'élément chauffant (1, 7) étant démarré lorsque l'utilisation du moteur à combustion interne comme source d'entraînement est attendu.

13. Procédé selon l'une des revendications précédentes 7 à 11, **caractérisé en ce qu'**une fonction de préchauffage est prévue pour l'élément chauffant, la fonction de préchauffage pouvant être démarrée sur la base de valeurs acquises par une unité de surveillance, via une minuterie ou via un élément de commande extérieur.
